# EUROPEAN PATENT SPECIFICATION

(11) **EP 3 580 587 B1**
(45) Date of publication and mention of the grant of the patent: **17.08.2022**
(21) Application number: 18704215.5
(22) Date of filing: 07.02.2018
(51) Int. Cl.: G01V 3/15, G01B 7/12

(54) **DETECTION METHOD FOR A SCANNING DETECTOR**
DETEKTIONSMETHODE FÜR EINEN SCAN-DETEKTOR
PROCÉDÉ DE DÉTECTION POUR DÉTECTEUR À BALAYAGE

(30) Priority: 08.02.2017 EP 17155094
(43) Date of publication of application: 18.12.2019
(73) Proprietor: Hilti Aktiengesellschaft, 9494 Schaan (LI)
(72) Inventor: ABU ANTOUN, Chafic, 9470 Buchs (CH); KALUSCHE, Geert, 9472 Grabs (CH); GOGOLLA, Torsten, 9494 Schaan (LI); SCHOENBECK, Dietmar, 6811 Goefis (AT); WUERSCH, Christoph, 9470 Werdenberg (CH)
(74) Representative: Hilti Aktiengesellschaft Corporate Intellectual Property
(86) International application number: PCT/EP2018/053022
(87) International publication number: WO 2018/146124

(56) References cited:
- WO-A1-90/06488
- DE-A1- 19 841 325
- US-A- 5 296 807
- US-A1- 2004 021 461
- US-A1- 2010 186 504

## Description

### BACKGROUND OF THE INVENTION

The present invention relates to a handheld scanning detector, particularly for detecting structures embedded in concrete or masonry, and its detection method

A scanning detector is known from US 7,355,410. The scanning detector recognizes and localizes iron reinforcement bars in concrete. The scanning detector cannot distinguish different materials, in particular, if different materials are in close vicinity.

US 2010/186504 A1 discloses a detection method of identifying metallic structures below a surface with a scanning detector having detection coils and an excitation coil arrangement. The scanning detector determines its movement over a to-be-analysed surface area. The detector measures an amplitude of a signal induced in the detection coil for several positions along a path on the surface area. A diameter of a metallic structure is determined based on a width of a path segment. The depth by which the metallic structure is buried below the surface is determined based on a look-up table. A display gives a visual representation of the measuring results.

DE 198 41 325 A1 discloses a detector using two coils with currents of different frequencies for the identification of diameter and depth of buried structures.

US 5 5296 807 A discloses means for identification of diameter and depth of reinforcing rods by evaluating a signal curve along a path. The depth is roughly estimated by amplitude of a signal. A rod diameter is determined based on a ratio of a width of the curve compared to a height of the curve.

WO 90/06488 A1 discloses means for identification of diameter and depth of a hidden stainless steel bar by comparing signals received from two displaced search coils or two temporarily displaces sampling pulses.

US 2004/021461 A1 discloses means for identification of diameter and depth of steel pipes based on an empirically obtained measurement grid setting magnitude and phase of signals of an impedance sensor in relation to diameter and depth of steel pipes.

### SUMMARY OF THE INVENTION

The inventive detection method identifies metallic structures below a surface with a scanning detector according to claim 1.

### BRIEF DESCRIPTION OF THE DRAWINGS

Exemplary embodiments of the present invention are described below with reference to the drawings. The drawings do not necessarily illustrate the exemplary embodiments to scale, but, rather, are depicted in schematic and/or slightly distorted form when this is useful for the explanation. With respect to additions to the teaching which are directly apparent from the drawings, reference is made to the relevant related art. In this regard it is noted that a variety of modifications and alterations regarding the form and the detail of a specific embodiment may be made without departing from the general concept of the present invention, the scope of which is to be determined by the appended claims. The features of the present invention disclosed in the description, the drawings, and the claims may be important to the refinement of the present invention, taken alone as well as in any given combination.

In addition, any combination composed of at least two of the features disclosed in the description, the drawings, and/or the claims may be contemplated by those skilled in the art, without departing from the inventive concept, the scope of which is to be determined by the appended claims.

The general concept of the present invention is not limited to the exact form or the detail of the preferred specific embodiment illustrated and described below or is not limited to a subject matter which would be delimited in comparison to the subject matter claimed in the claims. For given dimension ranges, values within the stated limits are also intended to be disclosed as limiting values, and may be used and claimed as desired. For the sake of simplicity, the same reference numerals are used below for identical or similar parts or parts having an identical or similar function.

Figures show:
- Fig. 1: a scanning detector for subsurface structures
- Fig. 2: the scanning detector hovering above subsurface structures
- Fig. 3: an amplitude and phase of a signal induced across a subsurface structure
- Fig. 4: a flow diagram of an interpretation process
- Fig. 5: a signal phase p for a copper rod under a wall surface
- Fig. 6: a signal phase p for an iron rod and a copper rod under a wall surface
- Fig. 7: a parameterization of a material and phase peak type relation
- Fig. 8: an excitation current or emitted magnetic field and induced signal
- Fig. 9: a graphical representation of a parameterization of amplitude ratios for different diameters and depth
- Fig. 10: a graphical representation of a parameterization of depth and amplitude A relation
- Fig. 11: the scanning detector

### DETAILED DESCRIPTION

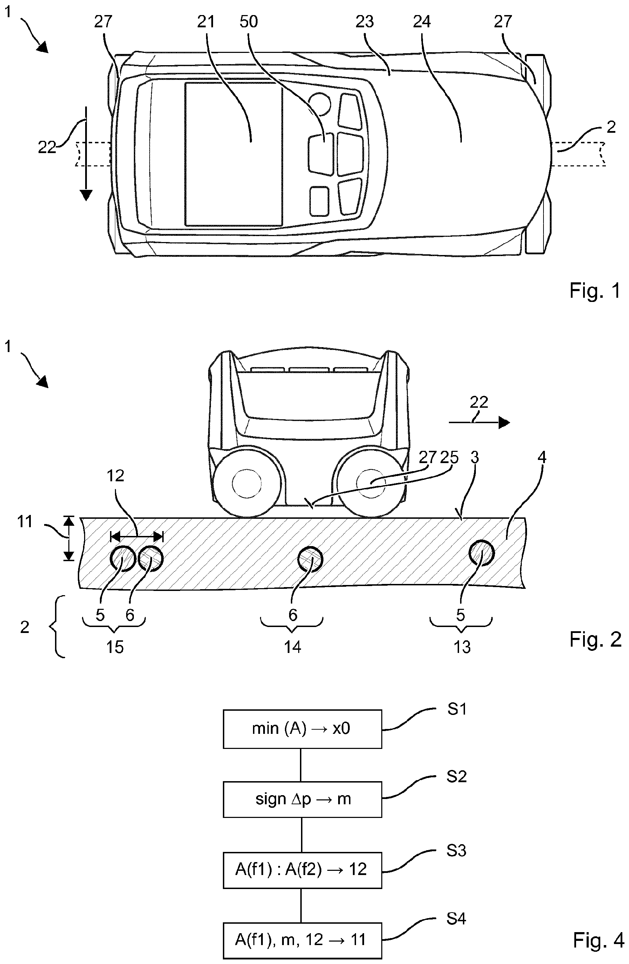

Fig. 1 shows a scanning detector **1** according to the present invention for detecting and identifying a subsurface structure **2** hidden below a surface **3.** The surface **3** is in particular a surface of a building, like a wall **4,** a ceiling, a floor. The surface **3** is made of non-magnetic and non-metallic materials used in constructing buildings, like concrete, stone, brick, wood, carpet, paper, etc.. The subsurface structure **2** may contain metallic structures **2** comprising steel objects **5,** like armouring irons made of steel, etc.; and copper objects **6,** like electric installations like power lines made of copper, etc.; or other installations like water tubes, gas tubes, etc..

The scanning detector **1** emits an oscillating magnetic field. The magnetic field interacts with metallic structures **2** which respond by a counter magnetic field. The scanning detector **1** senses the counter magnetic field as will be explained in greater detail herein below. The counter magnetic field has a field strength and a response delay with respect to the emitted magnetic field. The scanning detector **1** detects an electric signal **7** responsive to the counter magnetic field; the field strength corresponds to amplitude **A** and the response delay to phase **p** of the signal **7.** The amplitude **A** depends on a distance between the scanning detector **1** and the structure **2,** size of the structure **2** and material **m** of the structure **2.** The phase **p** depends predominantly on the material and distance. Dependency of amplitude **A** and phase **p** of the signal **7** on the emitted magnetic field and layout of the scanning detector **1** may be taken into account by a calibration of the scanning detector **1.**

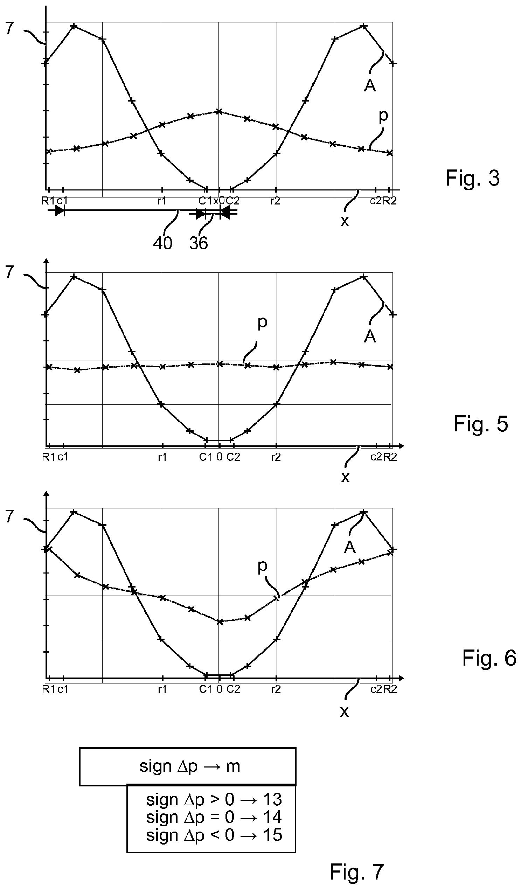

The scanning detector **1** is moved along a linear path or a curved path on the surface **3.** As the distance between the scanning detector **1** and the structure **2** changes a change in the counter magnetic field is detected. Fig. 3 illustrates an example of the behaviour of the signal **7** and its amplitude **A** and phase **p** along the path over a steel object **5** for an embodiment of the scanning detector **1.** The horizontal axis denotes the lateral distance **x** of the scanning detector **1** to the structure **2.** The scanning detector **1** is right above the structure **2** at the midpoint **x0** where the distance of the scanning detector **1** to the structure **2** equals the depth by which the structure **2** is buried into the wall **4.** Field strength and delay of the counter magnetic field have their maxima at the midpoint. The signal amplitude **A** shows two maxima symmetrically to the midpoint and zero amplitude **A** at the midpoint which is due to the layout of the embodiment, only. The scanning detector **1** has two symmetrically arranged and counter-balanced detection coils **8, 9** in order to suppress offsets and noise. The individual signals of both detection coils **8, 9** are equally strong at the midpoint **x0** and cancel out. The field strength at the midpoint can be unequivocally derived from the signal amplitude **A** at the maxima or the steepness of the signal amplitude **A** between the maxima. A more sophisticated approach uses a reverse model taking into account the specific layout of the scanning detector **1.** The exemplary steel object **5** results in a maximum of the phase **p** of the signal **7,** with respect to the emitted magnetic field, at the midpoint.

The scanning detector **1** has an interpretation unit **10** for interpretation the change of the signal **7** along the path. The interpretation unit **10** derives the midpoint **x0,** i.e. the lateral location of the structure **2,** the material composition of the structure **2,** the depth **11** of the structure **2** and the diameter **12** of the structure **2** Fig. 4). It is assumed that the structures **2** are very long compared to the diameter **12** and that the scanning detector **1** is moved approximately perpendicular to the structure **2.** The diameter **12** is the shortest dimension of the structure **2** in parallel to the surface **3.**

The interpretation unit **10** processes the signal amplitude **A** along the path for deriving the midpoint **x0 (S1).** The midpoint **x0** is identified as the position where the magnetic field is strongest. The embodiment of the scanning detector **1** may determine the midpoint **x0** as the position where the signal amplitude **A** has a local minima along the path, i.e. the amplitude **A** is rising from the midpoint **x0** in both directions starting from the midpoint **x0.** The minima value is close or equal to zero. The interpretation unit **10** can simply search for a zero value and determine the position of the zero value as midpoint, or search for a local minimum instead of for the zero value. The interpretation unit **10** can fit a symmetric polynomial of second or forth order to the amplitude along the path. Thus, several measurement points can be taken into account for a higher spatial accuracy.

The interpretation unit **10** processes the phase **p** signal along the path for deriving the material composition **m (S2.** The interpretation unit **10** discriminates three different structures **2:** a pure steel structure **13,** a pure copper structure **14** and a mixed steel and copper structure **15.** Spatial resolution of the scanning detector **1** limits a distinction of two structures **2** in close proximity over a single structure. For instance, the scanning detector **1** cannot distinguish two close smaller copper wires over a larger copper wire. However, the scanning detector **1** can distinguish a structure **13** solely made of steel objects **5** over a structure **14** made solely of copper objects **6** over a mixed structure **15** having steel objects **5** and copper objects **6.** The mixed structure **15** is likely a combination of two separate objects arranged in a distance below the spatial resolution of the scanning detector **1.** The mixed structure may as well contain a single object made of copper and steel.

The phase **p** shows different characteristics around the midpoint for these three structures **2.** A pure copper structure **14** has no effect on the phase **p** (Fig. 5). The phase **p** remains constant along the path even around the midpoint **x0** in an area in which the field strength changes drastically. Signal **7** for a pure steel structure **13** is illustrated in Fig. 3. The phase **p** has a peak at the midpoint **x0.**A mixed steel and copper structure **15** is shown in Fig. 6. The phase **p** shows a peak at the midpoint **x0,** however, the peak has opposite sign compared to the pure steel structure **13.** The relation of material and peak type is stored in a parameterization, e.g. a lookup table (Fig. 7). It depends on the layout of the detection scanner whether an steel structure **13** results in a maximum peak or a minimum peak. The scanning detector **1** can be calibrated in an experiment with an steel rod. The type of peak at the midpoint is determined, associated with pure steel structures **13** and the parameterization is set or updated accordingly. The opposite type of peak is associated with the mixed structure **15.** The parameterization is set accordingly. The calibration can be effected with an exemplary scanning detector **1** for all scanning detectors with the same layout at factory level, individually for each scanning detector **1** at factory level or the scanning detector 1 is provided with calibration routine which can be run by a user.

A process of the interpretation unit **10** is based on following steps. A derivative **dp** of the phase **p** along the path while approaching the midpoint is determined. The parameterization of the peak type and material relation is loaded. If there is no change, the structure is identified as a pure copper structure **14.** If the sign of the change corresponds to the steel peak, the structure is identified as a pure steel structure **13** otherwise the structure **2** is identified as a mixed structure **15.** The method preferably does not use the absolute value of the phase **p** but only the change along the path. The accuracy can be enhanced by fitting a second or fourth grade polynomial to the measurement values and by deriving the change and sign from the fitted curve.

Steel-based objects **5** have a high content of at least 50 %, preferably 75 % of iron, e.g. steel. The magnetic and electric properties of the object are dominated by the iron content. The Steel-based objects have a very high relative magnetic permeability (> 100) and for a metal moderate electric conductivity, typically less than 10 nS/m (Mega Siemens per meter). Conductivity of steel-based objects is in the range of 1 MS/m to 10 MS/m. Copper-based objects **6** have a high content of at least 50 %, e.g. 75 %, preferably 90 % of copper. The magnetic and electric properties of the object are dominated by the copper content. Copper has a very weak response to magnetic fields. The relative magnetic permeability has a value of 0.999994, thus nearly 1 and significantly lower than iron or steel. The electric conductivity is high, about 60 MS/m, and significantly higher than iron or steel. Aluminium has some similarity to copper regarding these properties, i.e. a feeble response to magnetic fields (1.000022) and a high electric conductivity (37 MS/m). Copper and Aluminium are members of a group of non-magnetic (about 1.00) and highly conductive metals (>30 MS/m). Both copper and aluminium are the typical materials for power lines because of their high conductivity. Coatings of polymers, paper, fabric or other electrically isolating materials are disregarded and do not contribute to the content of the copper-based object or steel-based object. The objects **5, 6** are preferably massive or hollow rods. A steel-based object is free of copper and a copper-based object is free of iron. An object containing steel and copper is considered a mixed structure **15.** The characteristics shown in Fig. 6 may be explained by a cross-talk between the magnetic responsive steel and the magnetic less responsive copper objects **6.** This cross-talk leads to the non-linear behaviour. The cross-talk is pronounced for excitation frequencies in a coupling regime in the range between 15 kHz and 30 kHz. It is assumed that the impedance (resistivity) of the steel rod dampens the cross-talk at frequencies above 30 kHz. A cross-talk below the coupling regime is very weak.

The scanning detector **1** emits a sinusoidal magnetic field oscillating at a frequency f1 within the coupling regime. The corresponding counter magnetic field, i.e. signal **7,** is interpreted for determining the material. The corresponding counter magnetic field and signal **7** can be identified by a timely correlation with the sinusoidal field, i.e. appearing at the same time, or be identified to oscillate at the same frequency f1 within the coupling regime. Signals resulting from emitted magnetic fields oscillating at frequencies outside the coupling regime are not taken into consideration for determining the material.

The signal amplitude **A** depends on the already determined parameters: material and lateral distance **x** to the midpoint **x0,** and on the still to be determined parameters: depth **11** by which the structure **2** is buried and diameter **12** of the structure **2.**

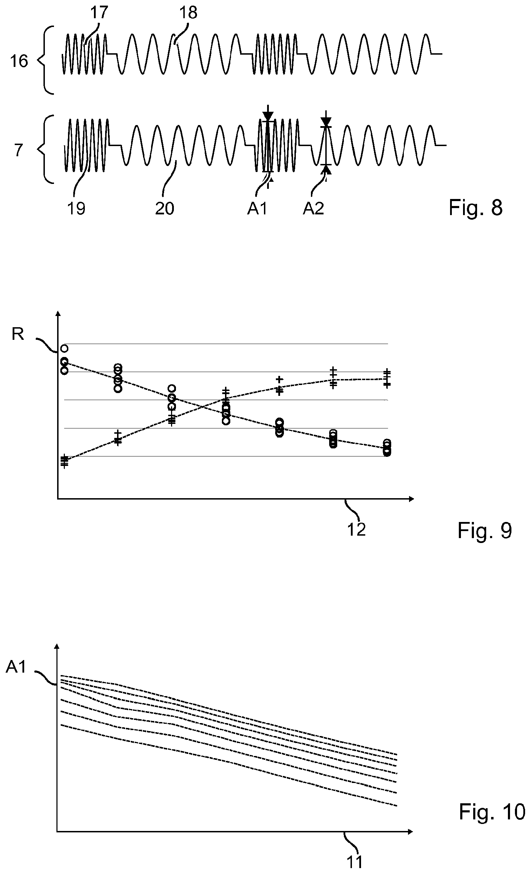

The scanning detector **1** emits an oscillating magnetic field **16** with two different sinusoidal waves in order to discriminate among effects of depth **11** and diameter **12** (Fig. 8). A first of the waves **17** has a frequency f1 within the coupling regime. A second of the waves **18** has a frequency f2 outside the coupling regime. The interpretation unit **10** determines the signal amplitude **A1** of a first signal **19** resulting from the first wave **17** and the signal amplitude **A2** of a second signal **20** resulting from the second wave **18.** The interpretation unit **10** derives a ratio R(A1:A2) from both signals. The ratio **R** is almost independent of the depth **11** but shows a dependency on diameter **12.** The ratio **R** is shown for steel structures **13** (circles) and mixed structures **15** (crosses) of different diameters **12** and different depth. Different depth **11** are collated in vertical columns, different depth are arranged along the horizontal axis. The dependency of the amplitude **A** on the diameter **12** is parameterized. An according set of parameterizations of amplitude ratio and diameter relations are stored in the interpretation unit **10.** The parameterization is independent of the depth **11.** The set includes parameterizations for the three different material compositions. The parameterizations can be generated by calculation, simulation, or experiments at or before factory stage. The parameterization can be stored as lookup tables or fitted functions. The interpretation unit **10** selects the parameterization for the determined material. A match for the above derived ratio **R** is searched in the selected parameterization to obtain the corresponding diameter **12 (S3).**

In principle, the user could be instructed to move the scanning detector **1** across the structure **2** twice. The scanning detector **1** emits the first wave **17** during the first move and the second wave **18** during the second move. A more practical approach switches repeatedly among the two waves **17, 18.** The interpretation unit **10** is synchronized with the switching. Signals within a time slot of the first wave **17** are associated with the first signal and signals within a time slot of the second wave **18** are associated with the second signal. Representative amplitudes **A1, A2** are derived from the signals. The representative amplitudes **A1, A2** may be the field strength at midpoint, the maximum of the signal, or maximum or amplitude of a symmetric function fitted to the signal. The ratio **R** can be the quotient (R = A1 / A2) of these two representative amplitudes.

The interpretation unit **10** can use three different waves, a first frequency is within the coupling regime, a second frequency is below the coupling regime and a third frequency is above the coupling regime. The amplitudes **A1, A2, A3** can be obtained as for two different waves. The ratio **R** can be calculated as R = (log(A3)-log(A1) / (log(A1)-log(A2) or R = A3/A2 (A3-A2) / (A2-A1). The interpretation unit **10** can use five different waves. First experiments indicate that a higher accuracy can be obtained if frequencies are selected based on the material. All structures are identified with a triplet consisting of one frequency within the coupling regime, one frequency below and one frequency above the coupling regime.

The interpretation unit **10** derives the depth **11** based on the representative amplitude **A1** and taking into consideration the already determined midpoint **x0,** material **m,** and diameter **12 (S4).** A graphical representation of a parameterization for a depth **11** and amplitude relation is illustrated for the example of a copper **6** structure **14** in Fig. 10. The lower lines are for smaller diameters, the upper lines are for larger diameters. Lookup tables for steel structures **13** and mixed structures **14** look similar albeit different absolute values for the amplitude **A1.** The interpretation unit **10** selects the parameterisation based on the determined material **m** and diameter **12.** The parameterisation is searched for the representative amplitude **A** to obtain the depth **11.**

The material **m,** the diameter **12,** and the depth **11** may be displayed to the user by a display **21.**

The scanning detector **1** may be manually moved by a user along a path. The path is laterally, i.e. on the surface **3.** The path may be a straight line represented by the direction **22.** The illustrated hand-held scanning detector has a housing **23** with a handle section **24.** The user can grasp the handle section **24** and slide the scanning detector **1** along the surface **3.** Thereby, a bottom surface **25** of the housing **23** preferably moves in parallel to the surface **3.** A movement sensor **26** detects the movement of the scanning detector **1** along the surface **3.** The illustrated movement sensor **26** uses wheel-shaped rollers **27** and a speedometer **28** to measure the movement relative to the wall **4.** The rollers **27** may be ball-shaped allowing for movements along a curved path. The movement sensor **26** can be based on an optical sensor as known from an optical mouse for computers. The position of the scanning detector **1** can be tracked by an external tracker and receiving its position by the tracker. Further techniques for measuring the movement of the scanning detector **1** can be employed.

The movement sensor **26** delivers continuously or in intervals a movement-signal **29.** The movement-signal **29** may contain information on position **x,** velocity, acceleration, etc. of the scanning detector **1.** An interpretation unit **10** derives the present position **x** based on the movement-signal **29.** The user preferably moves the scanning detector **1** continuously in one measuring direction **22** but can as well move the scanning detector **1** back and forth, in particular in areas where the user assumes a structure **2.** The interpretation unit **10** distinguishes movements to the left and right and derives by the movements the actual position **x.** Preferably, the interpretation unit **10** identifies movements in the plane, i.e. from left to right and vice versa as well as up and down.

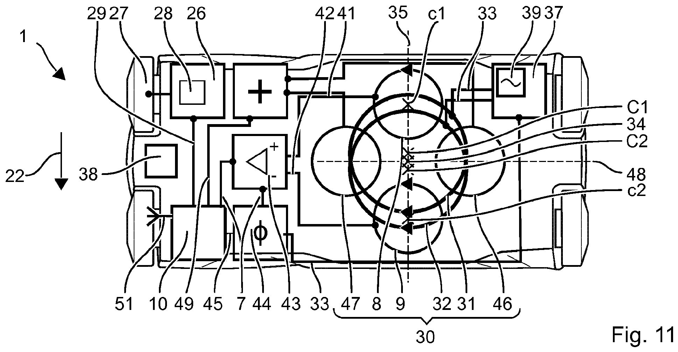

The illustrated scanning detector **1** has an electromagnetic field-sensor **30** comprising an arrangement of two excitation coils **31, 32** and two detection coils **8, 9** Fig. 11). All coils are arranged in parallel to the bottom surface **25** of the scanning detector **1.** The coils are essentially flat. The height of the coils is by at least a magnitude smaller than a diameter **12** of the coils. The vertical arrangement of the coils can be safely ignored in the ongoing description. Preferably, the detection coils **8, 9** are arranged in one plane. The excitation coils **31, 32** are powered by a sinusoidal (excitation-) current **33.** The excitation coils **8, 9** emit the sinusoidal magnetic field which is eventually disturbed by a present metallic structure **2.** The disturbed magnetic field is received by the detection coils **8, 9** in which a voltage is induced. Amplitude **A** and phase **p** of the induced voltage are analysed by an interpretation unit **10** as explained herein above to identify position, material and geometry of the present structure **2.**

The excitation coils **31, 32** are designed to generate identical magnetic fields while powered by identical currents. The design parameters like outer shape, diameter, number of windings, wire cross-section can be identical for both excitation coils **31, 32** or be adopted such that one or more parameters compensate for other parameters to achieve the identical magnetic fields. The pair of excitation coils **31, 32** is arranged symmetrically with respect to a centre **34** of the electromagnetic field-sensor **30.** The excitation coils **31, 32** are aligned on an axis **35** parallel to the measuring direction **22.** A preferred example uses elliptic or circular excitation coils **31, 32.** Their respective centres **C1, C2** are located on the axis **35.** The excitation coils **31, 32** are preferably slightly displaced to each other along the axis **35,** i.e. their respective centres **C1, C2** are offset to the centre **34.** A first excitation coil **31** is advancing the second excitation coil **32** along the measuring direction **22.** The offsets **36** of both centres **C1, C2** to the centre **34** are preferably equal. The excitation coils **31, 32** are overlapping. The respective radii **R1, R2** of the excitation coils **31, 32** are significantly larger than the offsets **36.** The radius **R1** may be at least five times larger than the offset. Preferably, the radii **R1, R2** are equal. The pair-wise configuration of the excitation coils **31, 32** is beneficial in terms of higher robustness and lower sensitivity of misalignment. Further, circular coils are easier to be manufactured. The pair of separate excitation coils **31, 32** may be substituted by a single excitation coil. The single excitation coil may be designed based on the superposition of the above pair of excitation coils **31, 32.**

The excitation coils **31, 32** are connected to a current source **37.** The current source **37** outputs the sinusoidal excitation current **33.** The frequency of the excitation current **33** is set by the control unit **38.** A waveform generator **39** converts the set frequency into a sinusoidal wave signal of this frequency. The waveform generator **39** may be implemented as a direct digital synthesizer. The synthesizer has a memory with a stored lookup table of a quantized sinusoidal wave. The synthesizer consecutively reads out values in the lookup table synchronized by a clock of the control unit **38.** The values are fed to a digital analogue convertor which outputs the sinusoidal wave signal. Sinusoidal waves with different frequencies can be generated by using a different synchronization with the clock, changing the clock, by storing different sets of sinusoidal waves in the lookup table or other techniques. The synthesizer may be implemented in a discrete circuit or as a routine processed by a microcontroller. The wave signal is forwarded to an amperage control of the current source **37.** The amperage control may be implemented by means of a transistor, amplifier or similar switching device. Alternatively, the waveform generator can be implemented as an analogue circuit. The different frequencies may be generated by a set of oscillators for each frequency, a tuneable oscillator or frequency mixers. A switch or an array of switches, which are controlled by the control unit **38,** connect the oscillators to the current source **37.** The amplitude of the excitation current **33** is preferably independent of the frequency.

The control unit **38** alters the frequencies of the excitation current **33** among the first frequency f1 and the second frequency f2. The first frequency f1 is in the coupling regime, the second frequency f2 is outside the coupling regime. For instance, the first frequency f1 is 25 kHz. For instance, the second frequency f2 is 1 kHz. The excitation coils **31, 32** emit the oscillating magnetic field in synchrony to the excitation current **33.** The interpretation unit **10** is synchronized with the control unit **38.** The interpretation unit **10** is updated about the frequency of the excitation current.

The pair of detection coils **8, 9** is located on the axis **35.** The detection coils **8, 9** are equally designed and generate the same eddy-current in amplitude and in phase when subjected to the same changing magnetic field. The design parameters comprise shape of the coil, diameter, number of windings, and cross-section of the wire. The pair of detection coils **8, 9** is arranged symmetrically with respect to the centre **34.** The first detection coil **8** is located before the sensor centre **34;** the second detection coil **9** is located behind the electromagnetic field-sensor **30** centre **34** as seen by the measuring direction **22.** The detection coils **8, 9** are overlapping with the excitation coils **31, 32,** but are not overlapping with each other. The first detection coil **8** overlaps with the first excitation coil **31** and may overlap with the second excitation coil **32;** the second detection coil **9** overlaps with the second excitation coil **32** and may overlap with the first excitation coil **31.** The overlap is chosen such that no voltage is induced in each of the detection coils **8, 9** in the only presence of air or in vacuum even though the excitation coils **31, 32** are powered by the current source **37.** The excitation coils **31, 32** generate a magnetic flux perpendicular to the coils, at least in good approximation near the coils. The magnetic flux flows in opposite directions in the area inside the pair of excitation coils **31, 32** compared to the magnetic flux in the area outside the pair of excitation coils **31, 32.** Each of the detection coils **8, 9** is located overlapping with the inside area and the outside area such that equal amounts of magnetic flow in both directions are flowing through the detection coil **8, 9.** Hence, the effective magnetic flux is zero for the detection coil **8, 9** and no eddy-current is generated. A preferred example uses elliptic or circular detection coils **8, 9.** The respective centres **c1, c2** of the detection coils **8, 9** are preferably located on the axis **35.** The detection coils **8, 9** are displaced by, preferably equal, displacement **40** to the sensor centre **34** along the axis **35.** The displacement **40** is chosen to achieve the above described overlap of the detection coils **8, 9** and the pair of excitation coils **31, 32.** The displacement **40** equals the radius **R1** of the first excitation coil **31** or is approximately 90 % to 100 % of the radius **R1.** The centre **c1** of the first detection coil **8** is on or near the circumference of the first excitation coil **31.** The centre **c1** of the first detection coil **8** is preferably inside the first excitation coil **31.** Symmetrically, the second detection coil **9** is on or near the second excitation coil **32.** The radii **r1, r2** of the detection coils **8, 9** are smaller than the radii **R1, R2** of the excitation coils **31, 32,** e.g. are less than 75 % of the radii **R1, R2.** The detection coils **8, 9** do not overlap with each other. The first detection coil **8** has a first sense of winding; the second detection coil **9** has a second sense of winding. The first sense of winding and the second sense of winding are equal, i.e. eddy-currents in the detection coils **8, 9** are of equal sign and phase for the same magnetic field.

The induced voltage signal **41** of the first detection coil **8** and the induced voltage signal **42** of the second detection coil **9** are subtracted to generate a difference signal **7.** The first detection coil **8** and the second detection coil **9** may be interconnected in series by wire to obtain the difference signal **7** with no circuitry. The induced voltage signals **41, 42** may be forwarded to a differential amplifier **43** or a similar unit for determining the difference signal **7.** The induced voltage signals **41, 42** may be individually pre-amplified. The difference signal **7** can be generated based on the pre-amplified induced voltage signals **41, 42.** The difference -signal **7** is the signal **7** processed by the interpretation unit **10** as explained along with Fig. 4.

The difference signal **7** has the same modulation as the induced voltage signals **41, 42** and the excitation current **33.** The phase-difference **p** of the difference signal **7** and the excitation current **33** is determined by a phase-analyser **44.** The phase-difference **p** short phase) is basically a measure for the delay of the difference signal **7** with respect to the excitation current **33.** The phase-analyser **44** may be incorporated in a logic circuitry, e.g. a microprocessor, or may be implemented by an analogue electric phase detector. The interpretation unit **10** receives the relative phase **p** via a signal **45** from the phase-analyser **44.** The interpretation unit **10** receives the amplitude **A** of the signal **7.** The interpretation unit **10** receives further a position signal **x** from the movement sensor **26.**

An optional single or an optional pair of secondary detection coils **46, 47** can be arranged perpendicular to the pair of (primary) detection coils **8, 9.** The secondary detection coils **46, 47** are arranged along a second axis **48** parallel to the surface **25** and perpendicular to the axis **35.** The second axis **48** crosses the centre **34.** The secondary detection coils **46, 47** are arranged symmetrically with respect to the axis **35.** Preferably, the secondary detection coils **46, 47** are circular or elliptic. Their respective centres may be located on the circumference of the excitation coils **31, 32.** The secondary detection coils **46, 47** are not counter balanced but the voltages induced in the secondary detection coils **46, 47** are positively added up. An electric sensor measures the voltage and generates a corresponding secondary signal **49.** The electric sensor can be an analogue device, e.g. a voltmeter, or an analogue digital convertor. The amplitude **A** of the secondary signal **49** rises with the scanning detector **1** is moved towards the midpoint **x0.**A maximum is reached at the midpoint **x0.** The interpretation unit **10** can determine the midpoint **x0** based on finding the maximum of secondary signal's amplitude.

The scanning detector **1** has a display **21** for displaying the position of hidden subsurface structure **2** and its material composition. The scanning detector **1** may comprise input elements **50** for starting the scanning process, recalibrating the scanning detector **1,** changing display settings etc.. The display **21** and the input elements **50** may be incorporated in the housing **23** of the scanning detector **1.** The scanning detector **1** may be equipped with a transceiver **51** for communicating with a detachable display, a detachable input device, a mobile device, a computer or other equipment. The transceiver **51** may transmit information to be illustrated on the external display instead or in addition to the display **21** and receive input parameter for controlling the scanning detector **1** instead or in addition to the input elements **50.** The transceiver **51** may incorporate a short range wireless communication protocol like blue-tooth or a long range communication protocol like GSM.

## Claims

1. Detection method of identifying metallic structures (2) below a surface (3) with a scanning detector (1) having a pair of laterally offset detection coils (8, 9) and an excitation coil arrangement (31, 32) symmetrically arranged with respect to the detection coils (8, 9), the method comprising the steps:
determining a movement of the scanning detector (1) along a path on the surface (3) with a movement sensor (26);
injecting a sinusoidal excitation current (33) into the excitation coil arrangement (31, 32); repeatedly switching a frequency of the sinusoidal excitation current (33) among at least a first frequency in a coupling regime between 15 kHz and 30 kHz and a second frequency outside the coupling regime;
measuring signal amplitude (A) and signal phase (p) of a signal (7) induced in the pair of detection coils (8, 9) for several positions along the path;
determining a material composition of the metallic structure based on the sign of a derivative of the phase (p) along the path;
determining an amplitude ratio (R) for signals of the first frequency to signals of the second frequency;
selecting a first parameterization among a set of stored parameterizations of amplitude ratio (R) and diameter (12) relations based on the determined material composition;
determining a diameter (12) of the metallic structure (2) based on the first parameterization and the amplitude ratio (R);
selecting a second parameterization among a set of stored parameterizations of amplitude (A) and depth (11) relations based on the determined material composition and the determined diameter (12);
determining a depth (11) by which the metallic structure (2) is buried below the surface (3) based on the second parameterization and the amplitude (A);
communicating the material composition, the diameter (12), and the depth (11) to a display (21) or to a transceiver (51).

2. Detection method according to claim 1, **characterized in that** the second frequency is selected based on the determined material for determining the amplitude ratio (R) for signals of the first frequency to signals of the second frequency.

3. Detection method according to claim 1 or 2, **characterized in that** the set of frequencies contains a frequency in the coupling regime between 15 kHz and 30 kHz, a frequency below the coupling regime and a frequency above the coupling regime, wherein the total of frequencies is five or less.

4. Detection method according to claim 2, **characterized in that** the amplitude ratio (R) is determined based on signals of one frequency in the coupling regime, signals of a frequency below the coupling regime, and signals of a frequency above the coupling regime.

5. Detection method according to claims 1 to 4, **characterized in that** a constant phase (p) along the path is evaluated as a pure copper structure (14), a positive derivate of the phase (p) while approaching the structure (2) is evaluated depending on a calibration setting as one of a steel structure (13) and a mixed steel-copper structure (15) and a negative derivate of the phase (p) while approaching the structure (2) is evaluated depending on a calibration setting as the other of a steel structure (13) and a mixed steel-copper structure (15).

6. Detection method according to claims 1 to 5, **characterized in that** a lateral position of the structure is determined based on the amplitude along the path.

## Patentansprüche

1. Detektionsverfahren zum Identifizieren von metallischen Strukturen (2) unter einer Oberfläche (3) mit einem Scan-Detektor (1) mit einem Paar lateral versetzter Detektionsspulen (8, 9) und einer Anregungsspulenanordnung (31, 32), die in Bezug auf die Detektionsspulen (8, 9) symmetrisch angeordnet ist, das Verfahren die folgenden Schritte umfassend:
Bestimmen einer Bewegung des Scan-Detektors (1) entlang eines Wegs auf der Oberfläche (3) mit einem Bewegungssensor (26);
Injizieren eines sinusförmigen Anregungsstroms (33) in der Anregungsspulenanordnung (31, 32);
wiederholtes Umschalten einer Frequenz des sinusförmigen Anregungsstroms (33) unter mindestens einer ersten Frequenz in einem Koppelungsbetrieb zwischen 15 kHz und 30 kHz und einer zweiten Frequenz außerhalb des Koppelungsbetriebs;
Messen einer Signalamplitude (A) und einer Signalphase (p) eines Signals (7), das in dem Paar von Detektionsspulen (8, 9) für mehrere Positionen entlang des Wegs induziert wird;
Bestimmen einer Materialzusammensetzung der metallischen Struktur auf der Grundlage des Vorzeichens einer Ableitung der Phase (p) entlang des Wegs;
Bestimmen eines Amplitudenverhältnisses (R) für Signale der ersten Frequenz zu Signalen der zweiten Frequenz;
Auswählen einer ersten Parametrierung aus einem Satz von gespeicherten Parametrierungen des Amplitudenverhältnisses (R) und der Durchmesserrelationen (12) auf der Grundlage der bestimmten Materialzusammensetzung;
Bestimmen eines Durchmessers (12) der metallischen Struktur (2) auf der Grundlage der ersten Parametrierung und des Amplitudenverhältnisses (R);
Auswählen einer zweiten Parametrierung aus einem Satz von gespeicherten Parametrierungen der Amplituden- (A) und Tiefenrelationen (11) auf der Grundlage der bestimmten Materialzusammensetzung und des bestimmten Durchmessers (12);
Bestimmen einer Tiefe (11), um welche die metallische Struktur (2) unter der Oberfläche (3) vergraben ist, auf der Grundlage der zweiten Parametrierung und der Amplitude (A);
Kommunizieren der Materialzusammensetzung, des Durchmessers (12) und der Tiefe (11) an eine Anzeige (21) oder an einen Sendeempfänger (51).

2. Detektionsverfahren nach Anspruch 1, **dadurch gekennzeichnet, dass** die zweite Frequenz auf der Grundlage des bestimmten Materials zum Bestimmen des Amplitudenverhältnisses (R) für Signale der ersten Frequenz zu Signalen der zweiten Frequenz ausgewählt ist.

3. Detektionsverfahren nach Anspruch 1 oder 2, **dadurch gekennzeichnet, dass** der Satz von Frequenzen eine Frequenz in dem Koppelungsbetrieb zwischen 15 kHz und 30 kHz, eine Frequenz unter dem Koppelungsbetrieb und eine Frequenz über dem Koppelungsbetrieb enthält, wobei die Gesamtzahl von Frequenzen fünf oder weniger ist.

4. Detektionsverfahren nach Anspruch 2, **dadurch gekennzeichnet, dass** das Amplitudenverhältnis (R) auf der Grundlage von Signalen einer Frequenz in dem Koppelungsbetrieb, von Signalen einer Frequenz unter dem Koppelungsbetrieb und von Signalen einer Frequenz über dem Koppelungsbetrieb bestimmt wird.

5. Detektionsverfahren nach den Ansprüchen 1 bis 4, **dadurch gekennzeichnet, dass** eine konstante Phase (p) entlang des Wegs als eine reine Kupfer-Struktur (14) bewertet wird, eine positive Ableitung der Phase (p) beim allmählichen Erreichen der Struktur (2) in Abhängigkeit einer Kalibrierungseinstellung als eine einer Stahl-Struktur (13) und einer gemischten Stahl-Kupfer-Struktur (15) bewertet wird und eine negative Ableitung der Phase (p) beim allmählichen Erreichen der Struktur (2) in Abhängigkeit von einer Kalibrierungseinstellung als die andere Stahl-Struktur (13) und einer gemischten Stahl-Kupfer-Struktur (15) bewertet wird.

6. Detektionsverfahren nach den Ansprüchen 1 bis 5, **dadurch gekennzeichnet, dass** eine laterale Position der Struktur auf der Grundlage der Amplitude entlang des Wegs bestimmt wird.

## Revendications

1. Procédé de détection consistant à identifier des structures métalliques (2) sous une surface (3) avec un détecteur à balayage (1) ayant une paire de bobines de détection (8, 9) décalées latéralement et un agencement de bobines d'excitation (31, 32) disposées symétriquement par rapport aux bobines de détection (8, 9), le procédé comprenant les étapes de :
détermination d'un mouvement du détecteur de balayage (1) le long d'un trajet sur la surface (3) avec un capteur de mouvement (26) ;
injection d'un courant d'excitation sinusoïdal (33) dans l'agencement de bobines d'excitation (31, 32) ;
commutation à plusieurs reprises d'une fréquence du courant d'excitation sinusoïdal (33) parmi au moins une première fréquence dans un régime de couplage entre 15 kHz et 30 kHz et une seconde fréquence en dehors du régime de couplage ;
mesure de l'amplitude de signal (A) et de la phase de signal (p) d'un signal (7) induit dans la paire de bobines de détection (8, 9) pour plusieurs positions le long du trajet ;
détermination d'une composition de matériau de la structure métallique sur la base du signe d'une dérivée de la phase (p) le long du trajet ;
détermination d'un rapport d'amplitude (R) pour des signaux de la première fréquence par rapport à des signaux de la seconde fréquence ;
sélection d'une première paramétrisation dans un ensemble de paramétrisations stockées de relations de rapports d'amplitude (R) et de diamètres (12) sur la base de la composition déterminée du matériau ;
détermination d'un diamètre (12) de la structure métallique (2) sur la base de la première paramétrisation et du rapport d'amplitude (R) ;
sélection d'une seconde paramétrisation dans un ensemble de paramétrisations stockées de relations d'amplitude (A) et de profondeurs (11) sur la base de la composition du matériau déterminée et du diamètre déterminé (12) ;
détermination d'une profondeur (11) à laquelle la structure métallique (2) est enterrée sous la surface (3) sur la base de la seconde paramétrisation et de l'amplitude (A) ;
communication de la composition du matériau, du diamètre (12) et de la profondeur (11) à un écran (21) ou à un émetteur-récepteur (51).

2. Procédé de détection selon la revendication 1, **caractérisé en ce que** la seconde fréquence est sélectionnée sur la base du matériau déterminé pour déterminer le rapport d'amplitude (R) pour des signaux de la première fréquence par rapport à des signaux de la seconde fréquence.

3. Procédé de détection selon la revendication 1 ou 2, **caractérisé en ce que** l'ensemble de fréquences contient une fréquence dans le régime de couplage entre 15 kHz et 30 kHz, une fréquence inférieure au régime de couplage et une fréquence supérieure au régime de couplage, dans lequel le total des fréquences est inférieur ou égal à cinq.

4. Procédé de détection selon la revendication 2, **caractérisé en ce que** le rapport d'amplitude (R) est déterminé sur la base de signaux d'une fréquence dans le régime de couplage, de signaux d'une fréquence inférieure au régime de couplage et de signaux d'une fréquence supérieure au régime de couplage.

5. Procédé de détection selon les revendications 1 à 4, **caractérisé en ce qu'**une phase constante (p) le long du trajet est évaluée en tant que structure de cuivre pur (14), une dérivée positive de la phase (p) pendant l'approche de la structure (2) est évaluée en fonction d'un paramètre d'étalonnage en tant que l'une parmi une structure en acier (13) et une structure mixte acier-cuivre (15) et une dérivée négative de la phase (p) pendant l'approche de la structure (2) est évaluée en fonction d'un paramètre d'étalonnage en tant que l'autre parmi une structure en acier (13) et une structure mixte acier-cuivre (15).

6. Procédé de détection selon les revendications 1 à 5, **caractérisé en ce qu'**une position latérale de la structure est déterminée sur la base de l'amplitude le long du trajet.
